(19) Europäisches Patentamt
European Patent Office
Office européen des brevets

(11) EP 2 680 030 B1

(12) **EUROPEAN PATENT SPECIFICATION**

(45) Date of publication and mention
of the grant of the patent:
**21.09.2016 Bulletin 2016/38**

(51) Int Cl.:
***G01S 7/497*** (2006.01)

(21) Application number: **13172926.1**

(22) Date of filing: **20.06.2013**

(54) **Optical axis adjusting apparatus and optical axis adjusting method for laser apparatus**

Vorrichtung zur Anpassung der optischen Achse und Verfahren zur Anpassung der optischen Achse für Laservorrichtungen

Appareil de réglage d'axe optique et procédé de réglage d'axe optique pour appareil laser

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.06.2012 JP 2012147577**
**29.11.2012 JP 2012261645**

(43) Date of publication of application:
**01.01.2014 Bulletin 2014/01**

(73) Proprietor: **Ricoh Company, Ltd.**
**Tokyo 143-8555 (JP)**

(72) Inventors:
• **Suzuki, Shuichi**
**Tokyo, 143-8555 (JP)**
• **Nakajima, Mitsuru**
**Tokyo 143-8555 (JP)**
• **Yoshimura, Kenichi**
**Tokyo 143-8555 (JP)**
• **Hayashi, Yuusuke**
**Tokyo 143-8555 (JP)**

(74) Representative: **Schwabe - Sandmair - Marx Patentanwälte Rechtsanwalt Partnerschaft mbB Joseph-Wild-Straße 20 81829 München (DE)**

(56) References cited:
**EP-A2- 1 615 047        DE-A1-102009 047 303**
**JP-A- 2004 045 092      JP-A- 2009 168 472**
**US-A1- 2010 256 940**

• **KYU TAK SON ET AL: "Multiple-Target Laser Rangefinding Receiver Using a Silicon Photomultiplier Array", IEEE TRANSACTIONS ON INSTRUMENTATION AND MEASUREMENT, IEEE SERVICE CENTER, PISCATAWAY, NJ, US, vol. 59, no. 11, 1 November 2010 (2010-11-01), pages 3005-3011, XP011308808, ISSN: 0018-9456**

## Description

<u>TECHNICAL FIELD</u>

The present invention relates to optical axis adjusting apparatuses and optical axis adjusting methods for laser apparatuses.

<u>BACKGROUND ART</u>

A testing apparatus which uses a laser as a probe is widely used in applications such as distance measuring, biological sensing, environmental sensing, etc. More specifically, a distance measuring apparatus which includes a laser light emitting device and a light receiving device in a housing to use a Time of flight (TOF) method which irradiates a modulated laser beam onto an object to be measured to receive a reflected light thereof and measures a distance from the object from a time difference between projected and received lights is used in a FA field and a safety apparatus for vehicles, ships, railroads, etc.

A laser distance measuring apparatus generally includes a light projecting unit which generates a laser pulse beam; and a light receiving unit which includes a light receiving device such as a photo diode, etc., that receives a laser pulse reflected from an object placed in front of the apparatus to convert the received reflected laser pulse into a voltage signal and an optical device such as a lens, etc., that guides the reflected light to the light receiving device. A distance between the distance measuring apparatus and the object may be calculated in accordance with a difference between a time at which the laser pulse is generated and a time at which the reflected light is received by the light receiving device.

Normally, the laser pulse is generated by applying a pulse-shaped driving current to a semiconductor laser diode and undergoes form shaping into a light beam which includes a predetermined light beam profile via an optical coupling device such as a coupling lens, etc., so as to be released out of the distance measuring apparatus. While a light reflected from a surface to be detected is scattered in a random direction at a reflection point thereof, only a light component reflected following an optical path which is equal to that of a light beam released from the distance measuring apparatus is input into the apparatus again. Here, coaxial optics in which the optical axis of the optical device which makes up the light receiving unit and the optical axis of the light projecting unit are matched is adopted to cause the reflected light input into the distance measuring apparatus to be guided to the light receiving device.

Moreover, there is also a scanning laser radar which is provided, at a latter stage of the optical coupling device, with an optical scanner which scans the light beam in a horizontal direction. As the optical scanner, a polygon mirror, a galvanometer mirror, etc., are used. A laser beam can be scanned by a mirror device to perform distance measurement for a wide range of regions in the horizontal direction.

Furthermore, in recent years, performing detection by measurement region division in a vertical direction as well as expansion of a measurement range in the horizontal direction may be required. In combination with scanning in the horizontal direction, distance measurement data can be drawn on a two-dimensional plane. As a measure of conveniently achieving the region division in the vertical direction, a method in which slant angles are provided on reflection faces of a rotating polygon mirror relative to a rotating axle thereof, such that the slant angles are varied relative to the multiple reflection faces, or a configuration in which multiple of the light receiving devices are lined up in the vertical direction is adopted.

As described above, there is known, in the related art, a method of dividing the detection region in the vertical direction by lining up multiple of the light receiving devices in the vertical direction to perform measurement in the laser distance measuring apparatus in which the light projecting unit and the light receiving unit are arranged as the coaxial optics.

However, while it is necessary to accurately adjust the optical axes of the light projecting unit and the light receiving unit in the laser distance measuring apparatus in which the multiple light receiving devices are lined up in the vertical direction, no specific adjusting methods or adjusting apparatuses are disclosed, making it difficult to accurately adjust the optics.

There is a problem that, when the optical axes of the light projecting unit and the light receiving unit are offset from an ideal state, a region in which the light beam irradiates the object to be measured and a region in which the light receiving device receives light are mutually offset, so that a region which is different from a proper measurement region is detected, a detection signal strength is reduced, etc.

Patent Document 1 discloses an adjusting method which, for an object of performing detection area position adjustment of a laser radar apparatus, a detection signal for reflection targets whose reflection faces are bent is monitored to fix the apparatus to a vehicle body at an appropriate position and, thereafter, correction by software is used to specify a detection area as a predetermined region.

In the method disclosed in Patent Document 1, optical axis adjustment is performed using the reflection targets having different distances from the laser distance measuring apparatus in the optical axis direction. However, the method disclosed in Patent Document 1 represents a method of specifying a detection region when a laser radar unit whose optical axis adjustment has been completed in advance is installed onto the vehicle body, so that an optical axis adjusting method of the light projecting and light receiving units in the unit body or a laser distance measuring module in which the multiple light receiving devices are arranged is not disclosed. Therefore, it is not possible to accurately divide, into multiple regions, a measurement angle range in the vertical direction to perform detection.

EP 1 615 047 A2 describes a method for calibrating an optical distance sensor on a vehicle. The road vehicle is positioned on a test area and the front of the vehicle is fitted with a distance measuring system in the form of a laser scanner. A video camera and the scanner connect with an on board computer. The vehicle is positioned in front of a calibration unit in a test centre. This provides test points on the surface.

DE 10 2009 047 303 A1 describes a device for calibrating a sensor. The device has a reflector module with matrix-like reflector elements, and a faceplate mask arranged at an optical path between a linear detection and ranging sensor and the module. The reflector elements are provided as retroreflectors or corner reflectors. Optically effective surfaces of the reflector elements are formed with spherical shape. The faceplate mask is divided into controllable elements, which are assigned to the reflector elements of the module. A matrix element of the module comprises a light receiver and a light transmitter.

Publication KYU TAK SON ET AL: "Multiple-Target Laser Rangefinding Receiver Using a Silicon Photomultiplier Array", IEEE TRANSACTIONS ON INSTRUMENTATION AND MEASUREMENT, IEEE SERVICE CENTER, PISCATAWAY, NJ, US, vol. 59, no. 11, 1 November 2010 (2010-11-01), pages 3005-3011, XP011308808, ISSN: 0018-9456 describes a multiple-target laser rangefinding receiver using a silicon photomultiplier array.

JP-A-2009-168472 describes a technology for calibrating a laser scanner without using any special apparatus. In this respect, a target having a vertical plane whose both right-and-left sides are parallel and vertical is scanned horizontally by the laser scanner from a measuring origin in front of the vertical plane, to thereby obtained point group data to measuring points to the number of M. An effective measuring point extraction part specifies end measuring points on the ends of both right-and-left sides of the vertical plane among the point group data, and extracts a relative coordinate of effective measuring points to the number of m between the end measuring points. A coordinate determination means sets a geodetic coordinate system based on a line (scanning line) cutting the vertical plane by a locus of an optical axis, and determines a relation parameter for relating the relative coordinate to a geodetic coordinate so that the square sum of a distance from an endpoint to the end measuring point, a distance from an endpoint to the end measuring point, and each distance from each effective measuring point other than the end measuring points to the scanning line becomes minimum.

US-2010/256940 A1 describes a laser scanner measuring system which has a laser scanner and a calibration target, wherein the laser scanner comprises a light emitting element for emitting a pulsed laser beam, a rotary projecting unit for projecting the pulsed laser beam for scanning, a distance measuring unit, which has a distance measuring light receiving unit, for measuring a distance by receiving a reflection light from an object to be measured, and a control unit for driving and controlling the light emitting element and the distance measuring unit, and wherein the calibration target has a reflection sector with a known shape and with high reflectance and is installed at a known position, comprising a step for judging a reflected pulsed laser beam from the reflection sector as received by the distance measuring light receiving unit by detecting a level of light quantity, a step for determining a center position of the reflection sector based on the result of the judgment, and a step for calibrating the laser scanner measuring system based on the determined center position and on the known position.

Patent Document

     Patent Document 1: JP2002-174684A
     Patent document 2: EP 1 615 047 A2
     Patent document 3: DE 10 2009 047303 A1
     Patent document 4: JP 2009 168472 A
     Patent document 5: US 2010/256940 A1

Non-Patent Literature

Publication: KYU TAK SON ET AL: "Multiple-Target Laser Rangefinding Receiver Using a Silicon Photomultiplier Array", IEEE TRANSACTIONS ON INSTRUMENTATION AND MEASUREMENT, IEEE SERVICE CENTER, PISCATAWAY, NJ, US, vol. 59, no. 11, 1 November 2010 (2010-11-01), pages 3005-3011, XP011308808, ISSN: 0018-9456

SUMMARY OF THE INVENTION

The invention is defined by the subject-matter of the independent claims. The dependent claims are directed to advantageous embodiments.

ADVANTAGES OF THE INVENTION

Advantageously, it is provided, in a laser distance measuring apparatus in which a measurement angle range is divided into multiple regions in a vertical direction to perform detection of an object, a target for optical axis adjustment that is for accurately adjusting an optical axis of an emitting light beam and an optical axis of a light receiving device.

Advantageously, an optical axis adjusting apparatus for a laser apparatus is provided, the optical axis adjusting apparatus including a modulated light beam generating unit which includes a light source and a coupling lens to release a light beam to irradiate the released light beam to a detection target; multiple light receiving devices which receive light reflected from the detection target; a reflected light collecting unit which collects light reflected from the detection target to guide the collected light to the multiple light receiving devices; and first and second targets, wherein the multiple light receiving devices are arranged along a vertical direction relative to a releasing direction of the light beam such that the detection target is divided into multiple detection regions, wherein the first target and the second target are arranged such that a distance thereto from the laser apparatus in an emitting direction of the light beam mutually varies, wherein a width in a vertical direction relative to the emitting direction of the light beam of the first target is formed to be smaller than an irradiating width in the vertical direction of the light beam, and wherein one of the multiple light receiving devices is installed at a position which receives only a reflected light from the first target.

The present invention makes it possible to provide, in a laser distance measuring apparatus in which a measurement angle range is divided into multiple regions in a vertical direction to perform detection of an object, an adjusting method and a target for optical axis adjustment that are for accurately adjusting an optical axis of an emitting light beam and an optical axis of a light receiving device.

BRIEF DESCRIPTION OF THE DRAWINGS

Other features, and advantages of the present invention will become more apparent from the following detailed descriptions when read in conjunction with the accompanying drawings, in which:

FIG. 1 is a diagram for explaining a basic configuration and operating principles of a laser distance measuring apparatus in which a measurement region is divided in a vertical direction;
FIG. 2 is a diagram schematically illustrating a region in which a light beam released from the laser distance measuring apparatus irradiates a detection target and a region in which multiple light receiving devices lined up in the vertical direction may respectively receive light;
FIG. 3 is another diagram schematically illustrating the region in which the light beam released from the laser distance measuring apparatus irradiates the detection target and the region in which the multiple light receiving devices lined up in the vertical direction may respectively receive light;
FIG. 4 is a further diagram schematically illustrating the region in which the light beam released from the laser distance measuring apparatus irradiates the detection target and the region in which the multiple light receiving devices lined up in the vertical direction may respectively receive light;
FIG. 5 is a diagram illustrating an adjusting apparatus which adjusts a light projecting unit and a light receiving unit of the laser distance measuring apparatus;
FIG. 6 is a diagram schematically illustrating one example of a detection signal of the light receiving device before an optical axis adjustment of the light receiving unit is applied;
FIG. 7 is a diagram illustrating a relationship between a projected beam irradiating range and a first target, and a light receiving region of multiple light receiving devices;
FIG. 8 is a diagram illustrating a received light signal waveform;
FIG. 9 is another diagram illustrating the relationship between the projected beam irradiating range and the first target, and the light receiving region of the multiple light receiving devices;
FIG. 10 is a diagram illustrating dimensions of the first target when an adjustment tolerance width is taken into account;
FIG. 11 is a diagram illustrating a signal waveform of the light receiving device;
FIG. 12 is a diagram illustrating a different example of a target for adjustment;
FIG. 13 is a diagram illustrating, in a case in which the laser distance measuring apparatus is adjusted indoors, how the light beam released from the laser distance measuring apparatus is propagated;
FIG. 14 is a diagram showing a reflected signal from the first target and a reflected signal from a second target;
FIG. 15 is a diagram showing a target region of a projected beam irradiating range;
FIG. 16 is a diagram showing a squares pattern, etc., carved in predetermined intervals that is drawn on a surface of the second target; and
FIG. 17 is a diagram illustrating a different adjusting apparatus which adjusts the light projecting unit and the light receiving unit of the laser distance measuring apparatus.

BEST MODE FOUR CARRYING OUT THE INVENTION

Embodiments of the present invention are described. The present invention includes the following features with an optical axis adjusting method of a laser distance measuring apparatus in which a measurement range is divided in a vertical direction.
In short, in the adjusting method of the laser distance measuring apparatus according to the present invention, position adjustment of optics is performed while observing reflection signals from multiple targets whose distances from the apparatus mutually differ and a size of one target (a first target) is set almost equal to that of a detection region of one of light receiving devices lined up in the vertical direction, so that only a reflection signal from the first target in an optimal position relationship of optical elements may be obtained.
Using the drawings, the above-described features of the present invention are explained in detail.

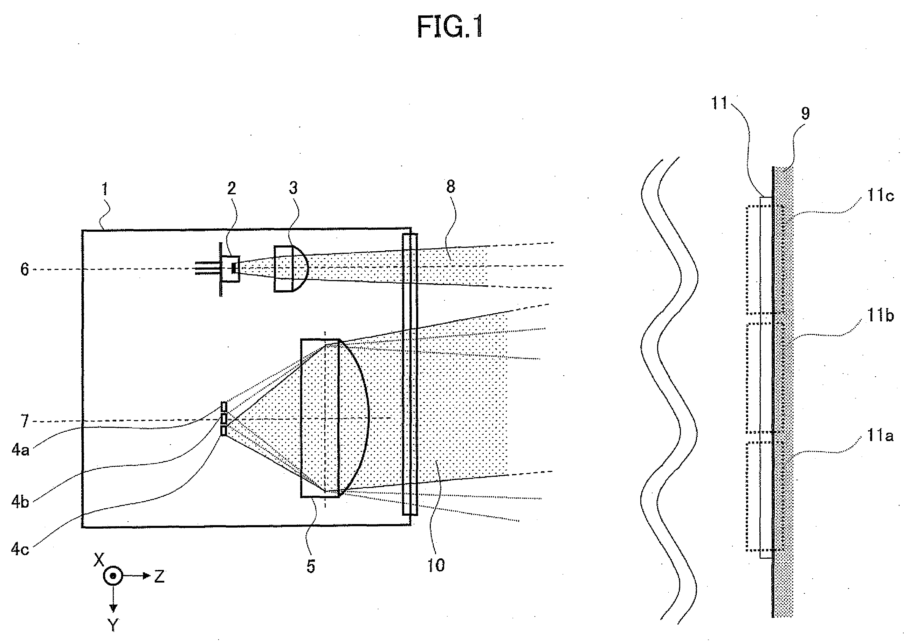

FIG. 1 is a diagram for explaining a basic configuration and operating principles of the laser distance measuring apparatus in which a measurement region is divided in the vertical direction. As an example, in FIG. 1, a detection region is divided into three in the vertical direction. However, the number of measurement regions divided into is not limited to this example.

A laser distance measuring apparatus 1 includes a light projecting unit including a light source 2, a coupling lens 3, etc.; and a light receiving unit including light receiving devices 4a, 4b, 4c and a receiving lens 5, etc., that guide light to the light receiving devices. The light projecting unit and the light receiving unit are arranged in proximity, and an optical axis of the light projecting unit and an optical axis of the light receiving unit may be considered to be in a coaxial relationship from a position distant by at least around a few meters. Moreover, while not shown in FIG. 1, an optical scanning mechanism which includes a rotating mirror, etc., may be provided in the back of the light projecting unit to scan the light beam in a horizontal direction (an X-axis direction).

A modulated laser light released from the light source 2 becomes a light beam having a predetermined divergence angle after passing through the coupling lens 3, and then is released from the laser distance measuring apparatus 1 as a projected beam 8 in a direction parallel to a Z axis, after which it irradiates an object to be detected 9. A light reflected by the object to be detected 9 is scattered in a uniform direction at a reflection point thereof, only a light component reflected following an optical path which is equal to that of a light beam released from the laser distance measuring apparatus 1 is guided to the light receiving devices 4a, 4b, and 4c via light receiving optics such as the light receiving lens 5, etc., within the laser distance measuring apparatus 1 and detected as a reflection signal.

A light beam irradiating angle range in the vertical direction (a Y-axis direction) is specified by a beam divergence angle in the vertical direction of the projected beam 8 which is released from the laser distance measuring apparatus 1. The beam divergence angle in the vertical direction depends on a focal distance of the coupling lens 3 and a light emitting width of the light source 2, so that both values are controlled to cause the light beam having a desired divergence angle in the vertical direction to be released from the laser distance measuring apparatus 1.

On the other hand, the reflected light from the object to be detected 9 returns to a light receiving mirror following the same path as the projected beam 8, so that a reflected light beam 10 which is coupled by the light receiving lens 5 also has a divergence angle equivalent to a divergence angle of the projected beam 8 in the vertical direction. Therefore, in an XY plane on which the light receiving devices 4a, 4b, and 4c are arranged, the reflected light beam 10 which passed through the light receiving lens 5 is collected at a position which is moved in the Y-axis direction from an optical axial center of the light receiving lens 5 in accordance with an angular component thereof.

FIG. 1 illustrates how the reflected light 10 from a topmost region as one example is input into the third light receiving device 4c via the light receiving lens 5.

Using this characteristic, as shown in FIG. 1, multiple of the light receiving devices 4a, 4b, 4c may be arranged along the vertical direction to divide the detection region 11 in the vertical direction to obtain distance information. A focal distance of the light receiving lens 5 and a detection width in a Y-axis direction of all of the light receiving devices 4a, 4b, and 4c are controlled, so that a detection angle range in the vertical direction is determined. Moreover, this detection angle range is set equivalently to the above-described light beam irradiating angle range and the light receiving devices 4a, 4b, 4c are divided into multiple regions in the Y-axis direction to detect the respective reflected light signals, making it possible to divide the detection range in the vertical direction.

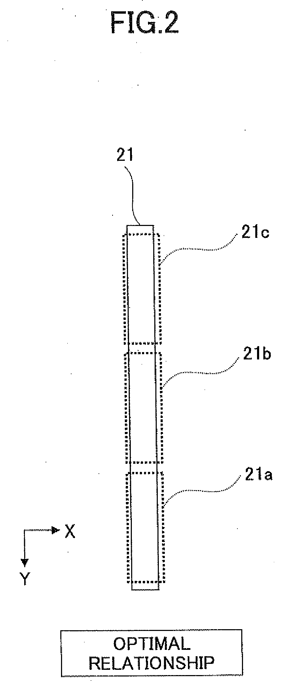

FIGS. 2 to 4 schematically illustrate the region in which the light beam released from the laser distance measuring apparatus irradiates a detection target and the region in which the multiple light receiving devices lined up in the vertical direction may respectively receive light. Here, a case is assumed such that three of the light receiving devices 4 are used to divide the whole light receiving range in the vertical direction into three regions to perform detection. However, according to the present invention, the number of light receiving devices 4 in which a number other than 3 may be used.

Preferably, irradiating regions 21, 31, and 41 are the same as or a little larger than a desired detection region. The reason is that, when the irradiating regions 21, 31, 41 are smaller than the desired detection region, a region to be detected is not irradiated by a laser light to be a probe, making detection impossible, while, when the irradiating regions 21, 31, 41 are much larger than the desired detection region, power density of the light beam which irradiates an object to be detected decreases, so that, not only a reflected light strength decreases, but also a reflected light from an unintended region is detected as a stray light, causing reliability of measurement to decrease.

For the same reason, it is preferable that the whole light receiving region which puts together divided light receiving regions 21a, 21b, 21c, 31a, 31b, 31c, 41a, 41b, and 41c also is the same as or a little larger than the desired detection region. The reason is that, when a detection range is too wide relative to the desired detection region, a light other than a reflected light from the detection target (for example, a light from an object irradiated by sunlight, or a laser light released from a different distance measuring apparatus and a reflected light thereof) is detected as a stray light, causing reliability of measured results to be lost.

As described above, it is desirable that the above-described irradiating region and the whole light receiving region are set to be regions which are mutually almost equal.

FIG. 2 shows an ideal relationship between the irradiating region and the light receiving region. In FIG. 2, for the horizontal direction (X-axis direction), the irradiating region 21 is included in all of the light receiving regions 21a, 21b, 21c, and, for the vertical direction (Y-axis direction), a large part of the irradiating region 21 is included in the light receiving regions 21a, 21b, 21c, and, moreover, the light receiving regions 21a, 21b, 21c are divided equally. Such a state is defined as an irradiating angle of the irradiating region and a light receiving angle of the light receiving region matching mutually.

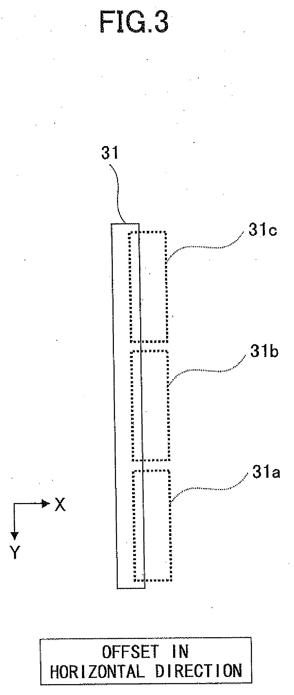

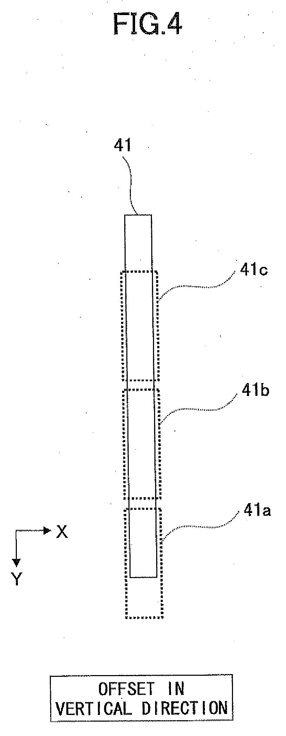

FIG. 3 shows a relationship between the irradiating region and the light receiving region when the projecting angle and the light receiving angle are mutually offset in the horizontal direction, while FIG. 4 shows a relationship between the irradiating region and the light receiving region when they are offset in the vertical direction. In either case, a region in which the irradiating region and the light receiving region overlap becomes small, so that the overlapping region merely occupies a limited range of an originally desired detection region. Therefore, a decrease in detection sensitivity of the reflected light occurs, causing reliability of measured results to be lost.

As described above, for a proper detection, it is necessary to adjust a relative position between the light receiving device which makes up the light receiving unit and the optical device which makes up the light projecting unit such that the irradiating angle and the light receiving angle mutually match.

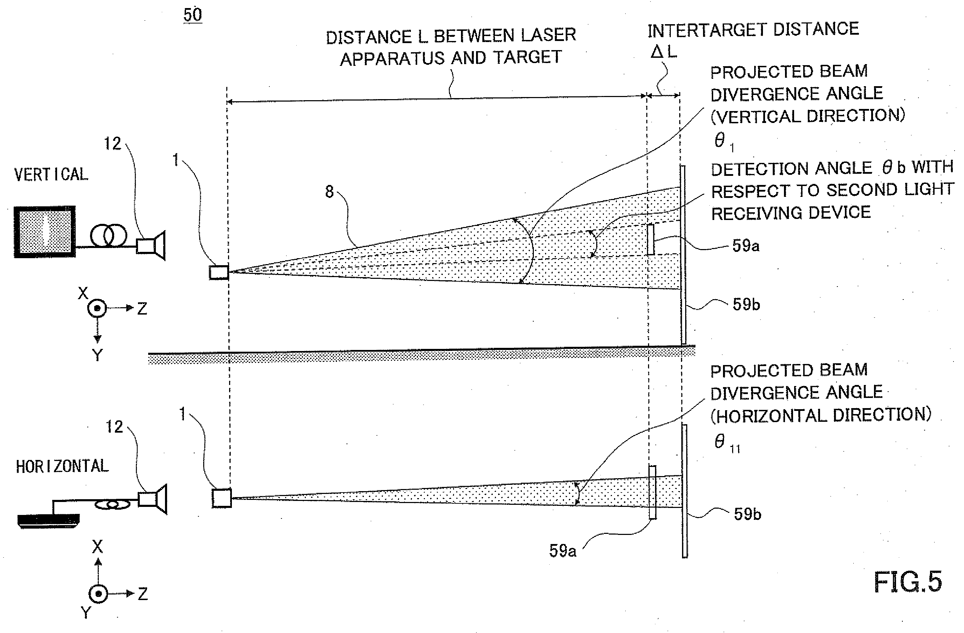

FIG. 5 illustrates an adjusting apparatus which adjusts the light projecting unit and the light receiving unit of the laser distance measuring apparatus. In the front (in a Z-axis direction) of the laser distance measuring apparatus 1 is arranged targets 59a and 59b for reflecting the projected beam 8 released from the laser distance measuring apparatus 1 and a reflected light from the targets 59a, 59b is incident to the light receiving device of the apparatus.

At a time of adjusting the optics, a temporal waveform of a reflected light which is detected by the light receiving device is observed. Here, the above-described targets 59a, 59b include 2 types of targets whose sizes and distances from the laser distance measuring apparatus 1 mutually differ. Here, a target with a small relative length in the vertical direction that is arranged at a position close to the laser distance measuring apparatus 1 is to be called the first target 59a, while a target with a large relative length in the vertical direction that is arranged at a position far from the laser distance measuring apparatus 1 is to be called the second target 59b.

A size of the target that is preferable for the adjusting method according to the present invention is described. FIG. 5 shows a relationship between an irradiating range of the projected beam and the size of the target. The second target 59b has dimensions which are larger than any of the irradiating ranges in the horizontal direction and the vertical direction of the projected beam 8. Therefore, the laser light is not irradiated in the back of the second target 59b. In this way, releasing of the laser light to the outside of the adjusting apparatus 50 is prevented, so that safety for people which are present outside of the adjusting apparatus 50 is maintained.

On the other hand, for the first target 59a, the size in the vertical direction thereof is set to be around the same size as that of one light receiving range out of the multiple light receiving devices. FIG. 5 shows an example of arrangement of a target when three light receiving devices are arranged along the vertical direction such that the light receiving regions are divided into three regions. Here, the first target 59a has a size corresponding to a center region of the three divided regions. Generally, sizes of the multiple light receiving devices are set to mutually equal sizes and a width in the vertical direction of the first target 59a generally becomes around 1/3 of the irradiating region of the projected beam 8. Moreover, a width in the horizontal direction of the first target 59a is to include a little larger dimension relative to an irradiating width in the horizontal direction of the projected beam 8.

Furthermore, the first target 59a which is set to the above-described size is fixed such that it is positioned at a center of the irradiating range of the projected beam 8. Alternatively, the first target 59a may be fixed in advance to a predetermined position and optics of the light projecting unit may be adjusted such that a center of the projected beam 8 irradiates the first target 59a. As the width in the horizontal direction of the first target 59a is set larger than a horizontal width of the projected beam, two irradiating regions which are mutually separated in the vertical direction are formed on the second target 59b in the back of the first target 59a.

Moreover, as a different embodiment of the first target 59a, with a width of the horizontal direction thereof being set to be of sufficiently large dimensions relative to an irradiating width in the horizontal direction of the projected beam, what draws, on the surface thereof, an irradiating target position of the projected beam may be used. With a method of obtaining a beam profile as described below, releasing in the horizontal direction of the projected beam 8 may be specified to be within a predetermined range while observing the projected beam 8 projected to the first target 59a.

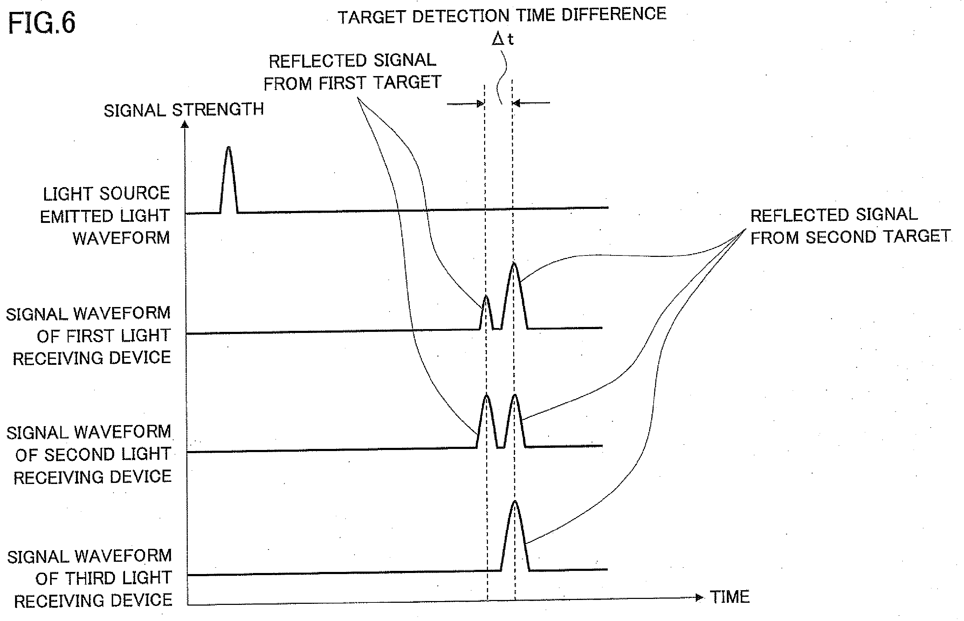

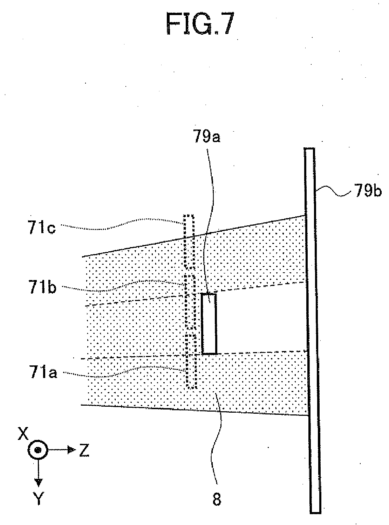

FIG. 6 schematically shows one example of a detection signal of the light receiving device before an optical axis adjustment of the light receiving unit is applied. FIG. 7 shows a relationship between a projected beam irradiating range and a first target, and a light receiving region of multiple light receiving devices.

As with a temporal emitted light waveform of a light source as shown in FIG. 6, the light source emits a pulse light only for a predetermined time range. Moreover, with a certain difference from a time at which the light source emits light, a reflection signal corresponding to the reflected light from the target appears in a signal waveform of the respective light receiving devices. Here, in the third light receiving device, only one peak is observed, while, in the first and second light receiving devices, two peaks are observed. Of the two peaks, a peak observed earlier corresponds to a reflection signal from the first target, while a peak observed later corresponds to a reflection signal from the second target.

When the positional relationship of the light receiving regions 71a, 71b, and 71c and the targets 79a and 79b are as shown in FIG. 7, the third light receiving device detects only a reflection signal relative to a light irradiated to the second target 79b, while the first and second light receiving devices respectively detect a light irradiated to the first target 79a and the second target 79b, causing two peaks to appear in a detection waveform.

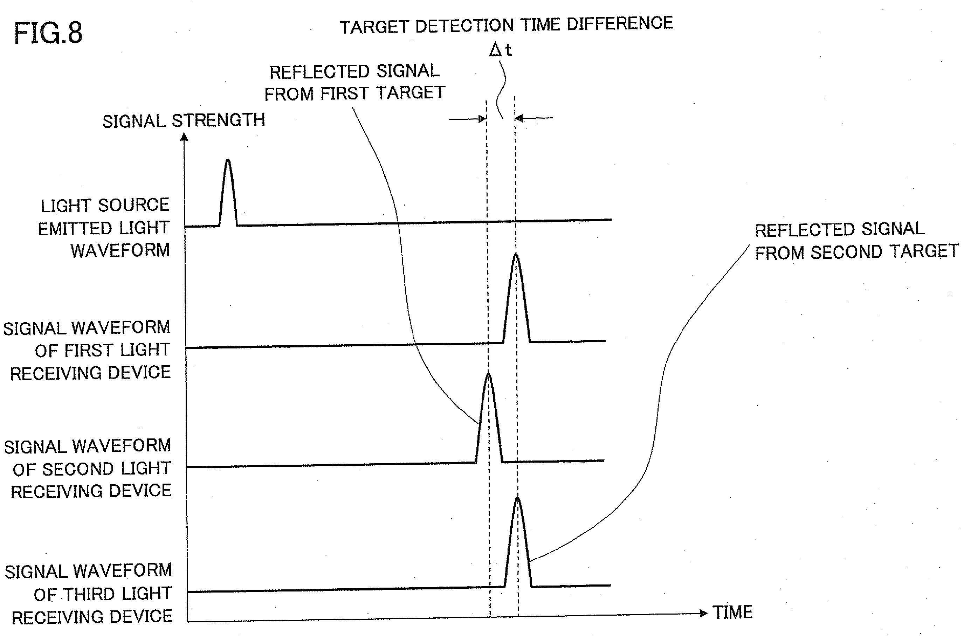

FIGS. 6 and 7 show states in which the light receiving region is offset from an ideal state in the vertical direction. A position of a light receiving device or an optical device of the light receiving unit is adjusted from this state to cause the whole of the light receiving regions 71a, 71b, and 71c to be moved downward so as to obtain a temporal waveform as shown in FIG. 8.

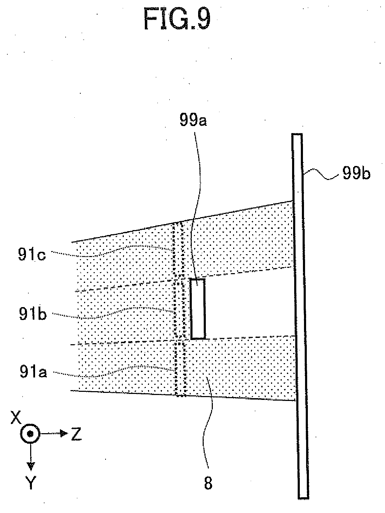

In FIG. 8, the respective signal waveforms of the multiple light receiving devices include one peak. In the first and third light receiving devices, only a reflected signal from the second target is detected, while, in the second light receiving device, only a reflected signal from the first target is detected. FIG. 9 illustrates a relationship between the projected beam irradiating range and the first target, and the light receiving region of the multiple light receiving devices. In FIG. 9, a light receiving region 91b of the second light receiving and the irradiating range of the first target 99a match. The first target is arranged at a center of the irradiating beam, causing the receiving optics to be adjusted to an optimal state at a time a light received signal waveform shown in FIG. 8 is obtained.

Example 1

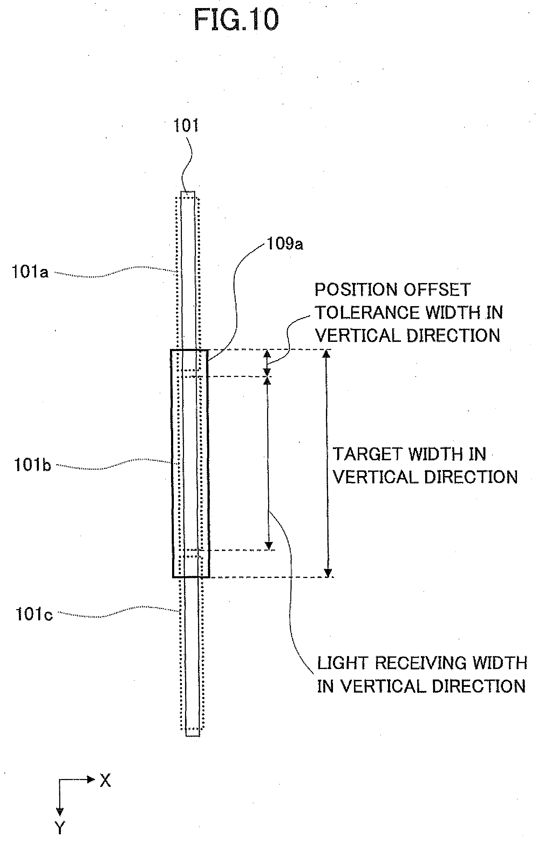

While a width in the vertical direction of the first target and a width in the vertical direction of a light receiving region of the second light receiving device match in the above-described explanations, a tolerance value exists for an error in adjustment in reality. Therefore, it is preferable to determine a size of the first target in light of this adjustment tolerance width. FIG. 10 is a diagram for explaining a dimension of the first target when the adjustment tolerance width is taking into account.

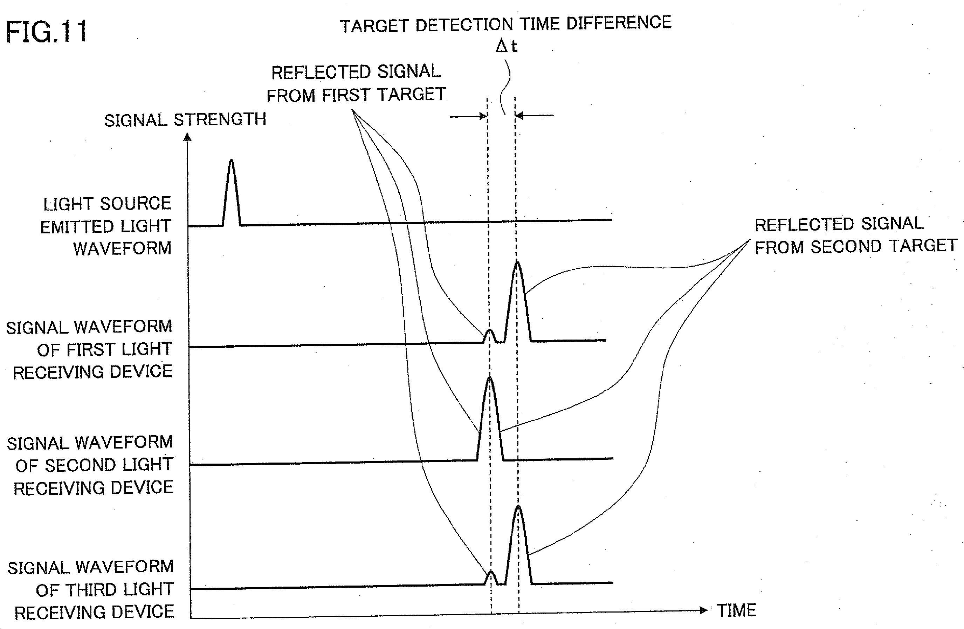

For example, when a position offset in the vertical direction in the light receiving unit is tolerated to some extent, a width in the vertical direction of a first target 109a is set to be larger than a width in the vertical direction of the second light receiving device by a width corresponding to the tolerance width thereof. Observing a reflection signal from this first target 109a, when a peak of the signal waveform of the second light receiving device becomes one as shown in FIG. 11, or, in other words, only a reflection signal from the first target 109a is detected, adjusting within a tolerance range of the position offset is achieved at that time.

Then, while a reflection signal from the first target 109a may be slightly detected in a signal waveform of the first and third light receiving devices in correspondence with an increased width of the first target 109a, adjustment may be completed when there is one peak in the signal waveform of the second light receiving device.

The above-described adjusting procedure and target configuration for adjustment make it possible to accurately adjust an optical device within a laser distance measuring apparatus. While a case is explained, envisaging that three light receiving devices are arranged in the vertical direction such that the whole detection range is divided into three regions in the vertical direction, the number of light receiving devices and the number of divided regions are not limited thereto, so that an accurate adjustment is possible with similar principles and procedures.

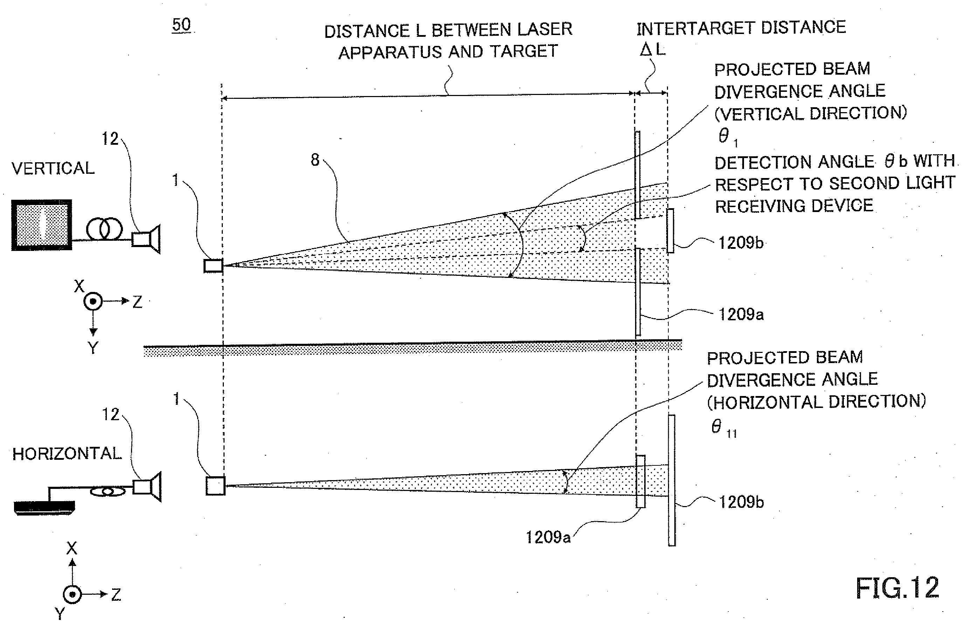

Moreover, as a different example of a target for adjustment, a slit is provided for a first target 1209a as shown in FIG. 12, so that a slit width in the vertical direction thereof may be set equal to the width in the vertical direction of the detection region of the second light receiving device. In this case, in an optimal state, only a reflected light from the first target is detected in the first and third light receiving elements and only a reflected light from the second target is detected in the second light receiving device.

Example 2

Next, Example 2 is described. When an adjustment method according to the present invention is embodied, it is necessary to accurately detect respective reflected signals from two types of targets. When an interval between the first target and the second target is extremely narrowed, in a detection waveform such as FIG. 6 in which reflected lights from both targets are included in the detection signal, clear separation of peaks becomes difficult. According to the distance measuring principles of the TOF method, there is a relationship of

$$\Delta L = \frac{c \cdot \Delta t}{2} \quad (1)$$ between an intertarget distance $\Delta L$

and a detection time difference $\Delta t$ between the two targets. Here, c is a speed of light.

On the other hand, a pulse half value width of a pulse light used as a light source of the laser distance measuring apparatus is around a few nanoseconds to a few tens of nanoseconds. Assuming a pulse width of 5 nanoseconds, it is necessary to set an inter-target distance such that it becomes at least 5 nanoseconds when converted to a detection time difference. From expression (1), the inter-target distance corresponding to the time difference of 5 nanoseconds is determined to be 0.75 m. When accurate adjustment is applied, it becomes necessary to detect a reflected light from a target 2 after a trailing portion of the reflection signal from the target 1 has attenuated sufficiently, so that it is desirable to arrange the inter-target distance to have a separation of at least around 1m.

Example 3

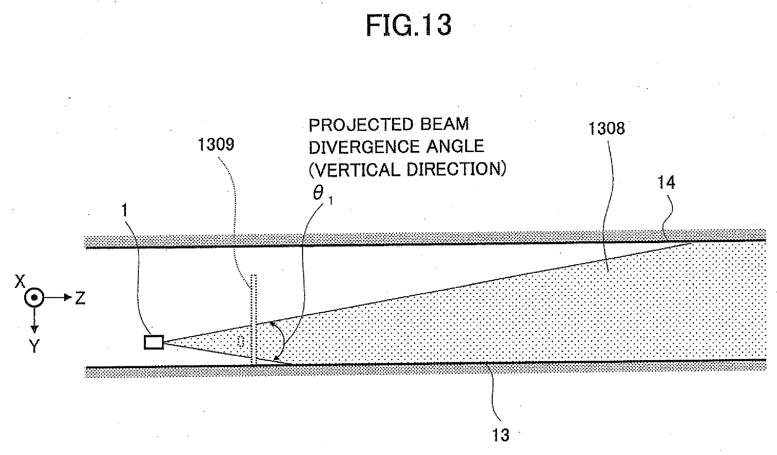

Next, explanations of a preferable distance between a laser distance measuring apparatus and a target are given using FIG. 13. FIG. 13 shows, in a case in which the laser distance measuring apparatus is adjusted indoors, how a light beam released from the laser distance measuring apparatus is propagated.

While optical axes of the light projecting unit and the light receiving unit almost match within the laser distance measuring apparatus 1, strictly speaking, there is an offset between the optical axes in the vertical direction as shown in FIG. 1. Therefore, making adjustment with a distance of the target and the laser distance measuring apparatus shortened in an extreme manner, possibly causing adjustment to be completed at a position which is offset from a predetermined detection region. Therefore, in principle, it is preferable that optical axis adjustment is embodied by placing a target as far as possible from the laser distance measuring apparatus.

However, adjustment of the optical device, which needs to be embodied under an environment in which temperature, etc., are precisely controlled, is embodied indoors by necessity. Therefore, it is impossible to separate, in an extreme manner, a distance between the target and the laser distance measuring apparatus. The reason is that, as shown in FIG. 8, such a separation causes a projected beam to be irradiated to a floor 13 or a ceiling 14 in an adjustment environment, making it difficult to irradiate a projection beam 1308 only onto a target 1309.

A divergence angle in the vertical direction of the projected beam released from a general laser distance measuring apparatus is around 1 to 10 degrees. Moreover, a height of the laser distance measuring apparatus 1 from the floor 13 is around 1 m. Adjusting at a position which is higher than the above makes work difficult and should be avoided from an eye safety point of view, as the projected beam 1308 released from the laser distance measuring apparatus 1 gets into the eyes of a direct working personnel.

When the divergence angle in the vertical direction of the projected beam is 1 degree, the projected beam 1308 irradiates the floor 13 in a range which is farther than 114 m, making it possible to separate around 100 m between the laser distance measuring apparatus 1 and the target 1309. However, when the divergence angle in the vertical direction of the projected beam 1308 is 10 degrees, the light beam irradiates the floor in a range which is farther than 11 m, making it not possible to arrange the target at a position which is farther away therefrom. In view of the above, a distance between the laser distance measuring apparatus 1 and the target 1308 is appropriately set in accordance with a divergence angle of the projected beam 1308 in a range of between 5 m and 100 m.

Example 4

Next, Example 4 is described. A material of a target according to the present invention is not particularly limited unless it is a material with an extremely low reflectance or a minute mirror plane. Moreover, it is also effective to vary the material between the first target and the second target, so that the reflectance of the respective targets are varied.

While the optical device is adjusted such that a peak other than a desired reflection peak (here called a "noise peak") is caused to disappear while observing a detection signal of the light receiving device according to the present invention, the strength of the noise peak decreases and discrimination of peak disappearance becomes difficult as it approaches an ideal state by adjusting. In order to solve this problem, it is effective to set a reflectance of the target 2 to be higher than a reflectance of the target 1. As a specific target material, a black napped material with low reflectance may be used for the first target, while a reflector plate on which fine glass beads or corner reflectors are lined up, etc., may be used for the second target.

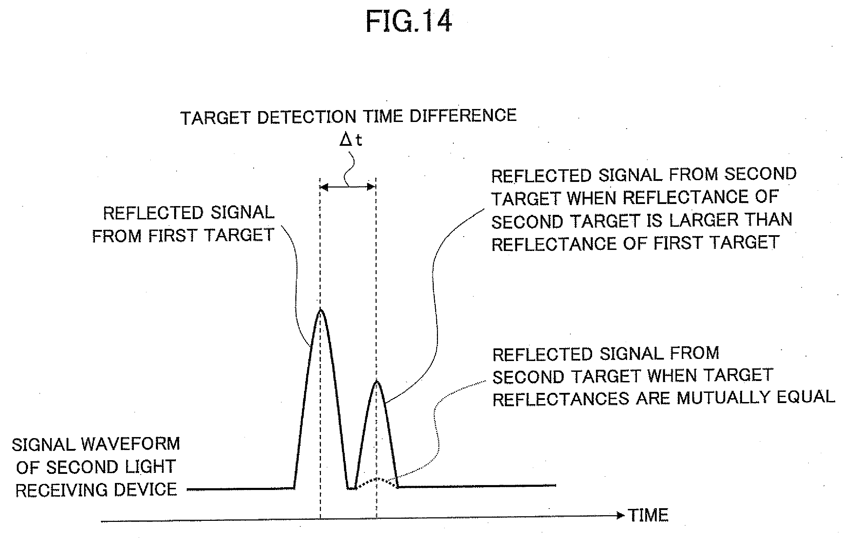

FIG. 14 is a diagram for explaining advantageous effects of mutually varying target reflectances. When the reflectance of the first target and the reflectance of the second target are mutually equal, even when a reflection peak from the second target is observed relatively small, the reflectance of the second target may be increased or the reflectance of the first target may be decreased to relatively increase a reflection signal from the second target, so that it becomes easy to discriminate an optimal position at which the reflection peak disappears. As described above, the present invention makes it possible to accurately adjust the light projecting unit and the light receiving unit of the laser distance measuring apparatus.

In the above-described adjusting method, the position of the target and the position of the light receiving region of the receiving optics are adjusted on an assumption that a central portion of the projected beam is irradiating the first target. Therefore, a positional relationship of the target and the irradiating range of the projected beam need to be adjusted in advance.

As a method of conveniently performing this adjustment, as shown in FIG. 5, it is effective to install an imaging apparatus such as a CCD camera, etc., in the vicinity of the laser distance measuring apparatus and adjust mutual positions while observing the beam projected onto the target. Here, a light source which is used for a common laser distance measuring apparatus is a near infrared light with a wavelength of around 850 to 950 nanometers and has a detection sensitivity even for a general imaging device for visible light, making it possible to observe a beam profile shape. Moreover, in order to more clearly observe the beam profile, it is effective to insert, into the imaging apparatus, a bandpass filter, etc., which blocks light other than the near infrared light. Moreover, as shown in FIG. 3, it is preferable to install the imaging apparatus in the back of the laser distance measuring apparatus and on an extension of an emitting axis of the projected beam. When a reflector plate, etc., which include a minute corner reflector as a target is used, a reflected light from the target returns to the laser distance measuring apparatus following the same path as a releasing direction of the projected beam.

Example 6

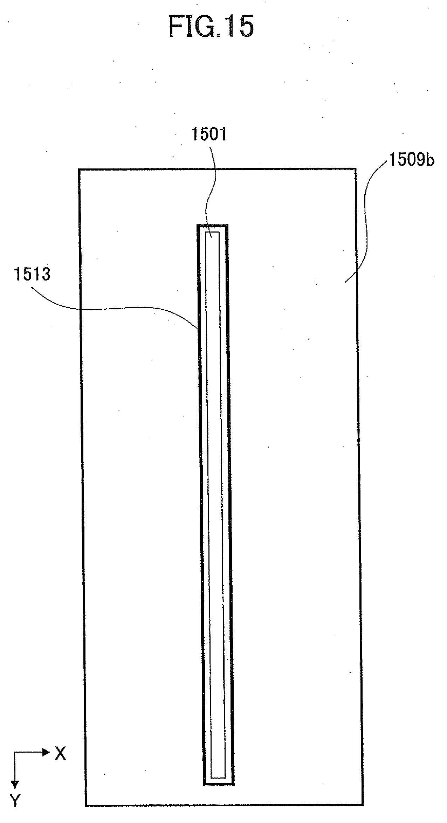

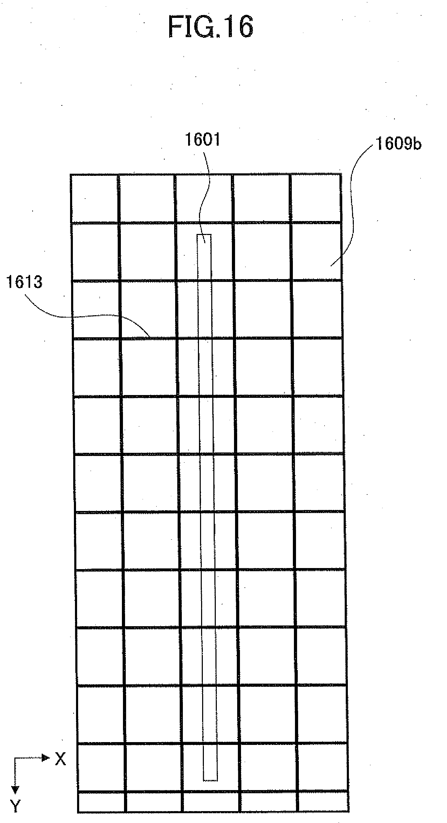

Moreover, when adjusting a positional relationship between the target and the light irradiating region, it is also effective to draw, on a second target surface 1609b, a target region 1501 of a projected beam irradiating range as shown in FIG. 15, or a squares pattern 1613 which is carved in predetermined intervals as shown in FIG. 16 and adjust a direction of a light beam released from the light projecting unit based thereon. Such a projecting target 1601 or squares pattern 1613 and the first target are installed such that they are in an optimal positional relationship in advance, so that adjusting a positional relationship between the projected beam and the second target causes the positional relationship between the target and the irradiating range of the projected beam to be in an optimal state.

Moreover, squares 1613 which are drawn on the target may be used to measure an irradiating range of a beam profile projected onto the target to also evaluate a divergence angle of the projected beam.

Example 7

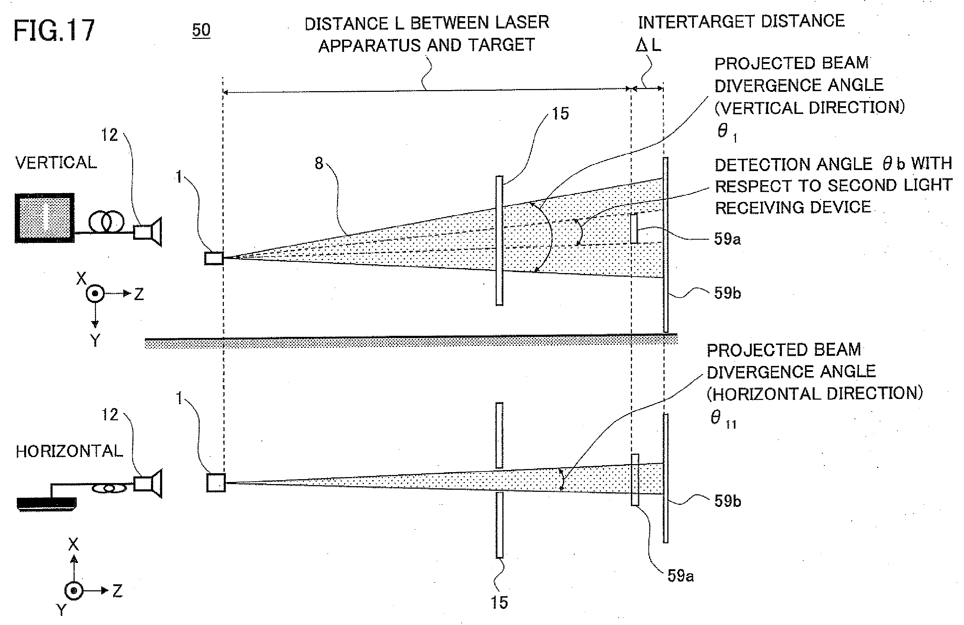

As a method of precisely adjusting the positional relationship in the horizontal direction of the target and the projected beam, as shown in FIG. 17, a slit 15 having a predetermined width may be inserted between the laser distance measuring apparatus and the first target. Here, the slit width is determined in accordance with a divergence angle in the horizontal direction of the projected beam.

For example, a slit 15 which has an opening width corresponding to an angle which is slightly smaller than a divergence angle is provided, so that a reflection signal from the slit 15 is monitored by a light receiving device. An emitting direction of the projected beam is adjusted such that the reflection signal becomes minimum, making it possible to accurately specify a release angle in the horizontal direction of the projected beam.

The method as described above makes it possible to adjust a positional relationship between the target and the light irradiating region to an optimal state and accurately adjust the light receiving unit and the light projecting unit of the laser distance measuring apparatus.

**Claims**

1. An optical axis adjusting apparatus for a laser apparatus, the optical axis adjusting apparatus comprising:

   a modulated light beam generating unit which includes a light source (2) and a coupling lens (3) to release a light beam (8) to irradiate the released light beam (8) to a detection target (9); multiple light receiving devices (4a, 4b, 4c) which receive light (10) reflected from the detection target (9); and a reflected light collecting unit (5) which collects light (10) reflected from the detection target (9) to guide the collected light to the multiple light receiving devices (4a, 4b, 4c); **characterized by**:

   first and second targets (9; 59a, 59b; 99a, 99b),
   wherein:

   the multiple light receiving devices (4a, 4b, 4c) are arranged along a vertical direction relative to a releasing direction of the light beam (8) such that the detection target (9) is divided into multiple detection regions (11a, 11b, 11c), the first target (59a; 99a) and the second target (59b; 99b) are arranged such that a distance thereto from the laser apparatus in an emitting direction of the light beam mutually varies, a width in a vertical direction relative to the emitting direction of the light beam of the first target (59a; 99a) is formed to be smaller than an irradiating width in the vertical direction of the light beam, one (4b) of the multiple light receiving devices (4a, 4b, 4c) is installed at a position which receives only a reflected light from the first target (59a; 99a), and the other (4a, 4c) of the multiple light receiving devices (4a, 4b, 4c) are installed at positions which receive only a reflected light from the second target (59b; 99b).

2. The optical axis adjusting apparatus for the laser apparatus as claimed in claim 1, wherein an angle of view in the vertical direction when the first target (59a) is viewed from the laser apparatus is generally equal to an angle in a vertical direction of a detection range which is divided into multiple detection regions (11a, 11b, 11c).

3. The optical axis adjusting apparatus for the laser apparatus as claimed in claim 1 or 2, wherein the first target (59a; 99a) and the second target (59b; 99b) are arranged with a separation greater than or equal to 1 m in a light beam irradiating direction.

4. The optical axis adjusting apparatus for the laser apparatus as claimed in any one of claims 1 to 3, wherein a distance between the first target (59a; 99a) and the second target (59b; 99b) and the laser apparatus is in a range of between 5 m and 100 m.

5. The optical axis adjusting apparatus for the laser apparatus as claimed in any one of claims 1 to 4, wherein a reflectance of the second target (59b; 99b) is larger than a reflectance of the first target (59a; 99a).

6. The optical axis adjusting apparatus for the laser apparatus as claimed in any one of claims 1 to 5, wherein an imaging apparatus which has sensitivity to the light beam released to the first target (59a; 99a) and the second target (59b; 99b) is arranged in the vicinity of the laser apparatus.

7. The optical axis adjusting apparatus of the laser apparatus as claimed in any one of claims 1 to 6, wherein a figure or squares shape that is generally equal to an irradiating region of the light beam is drawn on a surface of the first target (59a; 99a) and/or the second target (59b; 99b).

8. The optical axis adjusting apparatus of the laser apparatus as claimed in any one of claims 1 to 7, wherein a slit having an opening width which is generally equal to a divergence angle in a horizontal direction of the light beam is arranged between the first target (59a; 99a) and the second target (59b; 99b), and the laser apparatus.

9. An optical axis adjusting method for a laser apparatus including a modulated beam generating unit which includes a light source (2) and a coupling lens (3) to release a light beam (8) to irradiate the released light beam (8) to a detecting target (9), multiple light receiving devices (4a, 4b, 4c) which are arranged along a vertical direction such that they may receive a light (10) reflected by the detecting target (9) and detect the detecting target (9) divided into multiple detecting regions (11a, 11b, 11c), and a reflected light collecting unit (5) which collects light (10) reflected by the detecting target (9) to guide the collected light to the multiple light receiving devices (4a, 4b, 4c), the optical axis adjusting method comprising the steps of
providing first and second targets (9; 59a, 59b; 99a, 99b), wherein the first target (59a; 99a) and the second target (59b; 99b) are arranged such that a distance thereto from the laser apparatus in an emitting direction of the light beam mutually varies;
setting a width in a vertical direction relative to the emitting direction of the light beam of the first target (59a; 99a) to be smaller than an irradiating width in the vertical direction of the light beam;
adjusting a position of the multiple light receiving devices (4a, 4b, 4c) such that one (4b) of the multiple light receiving devices (4a, 4b, 4c) receives only a reflected light from the first target (59a; 99a) and the other (4a, 4c) of the multiple light receiving devices (4a, 4b, 4c) receive only a reflected light beam from the second target (59b; 99b).

10. The optical axis adjusting method for the laser apparatus as claimed in claim 9,
wherein an angle of view in the vertical direction when the first target (59a; 99a) is viewed from the laser apparatus is generally equal to an angle in a vertical direction of a detecting range which is divided into multiple detecting regions.

11. The optical axis adjusting method for the laser apparatus as claimed in claim 9 or 10, wherein the first target (59a; 99a) and the second target (59b; 99b) are arranged with a separation of greater than or equal to 1 m in a light beam irradiating direction.

12. The optical axis adjusting method for the laser apparatus as claimed in any one of claims 9 to 11, wherein a distance between the first target (59a; 99a) and the second target (59b; 99b) and the laser apparatus is in a range of between 5 m and 100 m.

13. The optical axis adjusting method for the laser apparatus as claimed in any one of claims 9 to 12, wherein a reflectance of the second target (59b; 99b) is larger than a reflectance of the first target (59a; 99a).

14. The optical axis adjusting method for the laser apparatus as claimed in any one of claims 9 to 13, wherein an imaging apparatus which has wavelength selective sensitivity to the light beam released to the first target (59a; 99a) and the second target (59b; 99b) is arranged in the vicinity of the laser apparatus.

15. The optical axis adjusting method of the laser apparatus as claimed in any one of claims 9 to 14, wherein a figure or squares shape that is generally equal to an irradiating region of the light beam is drawn on a surface of the first target (59a; 99a) and/or the second target (59b; 99b).

**Patentansprüche**

1. Vorrichtung zum Einstellen einer optischen Achse für eine Laservorrichtung, wobei die Vorrichtung zum Einstellen einer optischen Achse Folgendes umfasst:

    eine Erzeugungseinheit für einen modulierten Lichtstrahl, die eine Lichtquelle (2) und eine Kopplungslinse (3), um einen Lichtstrahl (8) auszugeben, um des ausgegebenen Lichtstrahl (8) auf ein Detektionsziel (9) zu strahlen, enthält; mehrere Lichtempfangsvorrichtungen (4a, 4b, 4c), um Licht (10), das von dem Detektionsziel (9) reflektiert worden ist, zu empfangen; und eine Sammeleinheit (5) für reflektiertes Licht, um Licht (10), das von dem Detektionsziel (9) reflektiert worden ist, zu sammeln und das gesammelte Licht zu den mehreren Lichtempfangsvorrichtungen (4a, 4b, 4c) zu führen; **gekennzeichnet durch**:

        ein erstes und ein zweites Ziel (9; 59a, 59b; 99a, 99b),
        wobei:

            die mehreren Lichtempfangsvorrichtungen (4a, 4b, 4c) entlang einer vertikalen Richtung bezüglich einer Ausgaberichtung des Lichtstrahls (8) so angeordnet sind, dass das Detektionsziel (9) in mehrere Detektionsregionen (11 a, 11 b, 11 c) aufgeteilt ist,
            das erste Ziel (59a; 99a) und das zweite Ziel (59b, 99b) so angeordnet sind, dass sich eine Entfernung von der Laservorrichtung zu ihnen in einer Emissionsrichtung des Lichtstrahls reziprok ändert,
            eine Breite in einer vertikalen Richtung bezüglich der Emissionsrichtung des Lichtstrahls des ersten Ziels (59a; 99a) so gebildet ist, dass sie kleiner als eine Strahlungsbreite in der vertikalen Richtung des Lichtstrahls ist,
            eine (4b) der mehreren Lichtempfangsvorrichtungen (4a, 4b, 4c) an einer Position angebracht ist, an der nur reflektiertes Licht von dem ersten Ziel (59a; 99a) empfangen wird, und
            die anderen (4a, 4c) der mehreren Lichtempfangsvorrichtungen (4a, 4b, 4c) an Positionen angebracht sind, an denen nur reflektiertes Licht von dem zweiten Ziel (59b; 99b) empfangen wird.

2. Vorrichtung zum Einstellen einer optischen Achse für die Laservorrichtung nach Anspruch 1, wobei ein Bildwinkel in der vertikalen Richtung allgemein gleich einem Winkel in einer vertikalen Richtung eines Detektionsbereichs, der in mehrere Detektionsregionen (11 a, 11 b, 11 c) aufgeteilt ist, ist, wenn das erste Ziel (59a) von der Laservorrichtung aus betrachtet wird.

3. Vorrichtung zum Einstellen einer optischen Achse für die Laservorrichtung nach Anspruch 1 oder 2, wobei das erste Ziel (59a; 99a) und das zweite Ziel (59b; 99b) in einem Abstand, der größer oder gleich 1 m in einer Strahlungsrichtung des Lichtstrahls ist, angeordnet sind.

4. Vorrichtung zum Einstellen einer optischen Achse für die Laservorrichtung nach einem der Ansprüche 1 bis 3, wobei eine Entfernung zwischen dem ersten Ziel (59a; 99a) und dem zweiten Ziel (59b; 99b) und der Laservorrichtung in einem Bereich von 5 m bis 100 m liegt.

5. Vorrichtung zum Einstellen einer optischen Achse für die Laservorrichtung nach einem der Ansprüche 1 bis 4, wobei ein Reflexionsgrad des zweiten Ziels (59b; 99b) größer als ein Reflexionsgrad des ersten Ziels (59a; 99a) ist.

6. Vorrichtung zum Einstellen einer optischen Achse für die Laservorrichtung nach einem der Ansprüche 1 bis 5, wobei eine Bildgebungsvorrichtung, die eine Empfindlichkeit für den Lichtstrahl, der zu dem ersten Ziel (59a; 99a) und dem zweiten Ziel (59b; 99b) ausgegeben worden ist, besitzt, in der Nähe der Laservorrichtung angeordnet ist.

7. Vorrichtung zum Einstellen einer optischen Achse der Laservorrichtung nach einem der Ansprüche 1 bis 6, wobei eine Figur oder eine quadratische Form, die allgemein gleich einer Strahlungsregion des Lichtstrahls ist, auf eine Oberfläche des ersten Ziels (59a; 99a) und/oder des zweiten Ziels (59b; 99b) gezeichnet ist.

8. Vorrichtung zum Einstellen einer optischen Achse der Laservorrichtung nach einem der Ansprüche 1 bis 7, wobei ein Spalt, der eine Öffnungsbreite besitzt, die allgemein gleich einem Abweichungswinkel in einer horizontalen Richtung des Lichtstrahls ist, zwischen dem ersten Ziel (59a; 99a) und dem zweiten Ziel (59b; 99b) und der Laservorrichtung angeordnet ist.

9. Verfahren zum Einstellen einer optischen Achse für eine Laservorrichtung, die Folgendes umfasst: eine Erzeugungseinheit für einen modulierten Lichtstrahl, die eine Lichtquelle (2) und eine Kopplungslinse (3), um einen Lichtstrahl (8) auszugeben, um den ausgegebenen Lichtstrahl (8) auf ein Detektionsziel (9) zu strahlen, enthält,

mehrere Lichtempfangsvorrichtungen (4a, 4b, 4c), die so entlang einer vertikalen Richtung angeordnet sind, dass sie Licht (10), das durch das Detektionsziel (9) reflektiert worden ist, empfangen können und das Detektionsziel (9), das in mehrere Detektionsregionen (11a, 11 b, 11 c) aufgeteilt ist, detektieren, und

eine Sammeleinheit (5) für reflektiertes Licht, um Licht (10), das durch das Detektionsziel (9) reflektiert worden ist, zu sammeln und das gesammelte Licht zu den mehreren Lichtempfangsvorrichtungen (4a, 4b, 4c) zu führen,

wobei das Verfahren zum Einstellen einer optischen Achse die folgenden Schritte umfasst:

Bereitstellen eines ersten und eines zweiten Ziels (9; 59a, 59b; 99a, 99b), wobei das erste Ziel (59a; 99a) und das zweite Ziel (59b; 99b) so angeordnet sind, dass sich eine Entfernung von der Laservorrichtung zu ihnen in einer Emissionsrichtung des Lichtstrahls reziprok ändert;

Einstellen einer Breite in einer vertikalen Richtung bezüglich der Emissionsrichtung des Lichtstrahls des ersten Ziels (59a; 99a), so dass sie kleiner als eine Strahlungsbreite in der vertikalen Richtung des Lichtstrahls ist;

Einstellen einer Position der mehreren Lichtempfangsvorrichtungen (4a, 4b, 4c) so, dass eine (4b) der mehreren Lichtempfangsvorrichtungen (4a, 4b, 4c) nur reflektiertes Licht von dem ersten Ziel (59a; 99a) empfängt und die anderen (4a, 4c) der mehreren Lichtempfangsvorrichtungen (4a, 4b, 4c) nur einen reflektierten Lichtstrahl von dem zweiten Ziel (59b; 99b) empfangen.

10. Verfahren zum Einstellen einer optischen Achse für die Laservorrichtung nach Anspruch 9, wobei ein Bildwinkel in der vertikalen Richtung allgemein gleich einem Winkel in einer vertikalen Richtung eines Detektionsbereichs, der in mehrere Detektionsregionen aufgeteilt ist, ist, wenn das erste Ziel (59a; 99a) von der Laservorrichtung aus betrachtet wird.

11. Verfahren zum Einstellen einer optischen Achse für die Laservorrichtung nach Anspruch 9 oder 10, wobei das erste Ziel (59a; 99a) und das zweite Ziel (59b; 99b) in einem Abstand, der größer oder gleich 1 m in einer Strahlungsrichtung des Lichtstrahls ist, angeordnet sind.

12. Verfahren zum Einstellen einer optischen Achse für die Laservorrichtung nach einem der Ansprüche 9 bis 11, wobei eine Entfernung zwischen dem ersten Ziel (59a; 99a) und dem zweiten Ziel (59b; 99b) und der Laservorrichtung in einem Bereich von 5 m bis 100 m liegt.

13. Verfahren zum Einstellen einer optischen Achse für die Laservorrichtung nach einem der Ansprüche 9 bis 12, wobei ein Reflexionsgrad des zweiten Ziels (59b; 99b) größer als ein Reflexionsgrad des ersten Ziels (59a; 99a) ist.

14. Verfahren zum Einstellen einer optischen Achse für die Laservorrichtung nach einem der Ansprüche 9 bis 13, wobei eine Bildgebungsvorrichtung, die eine wellenlängenselektive Empfindlichkeit für den Lichtstrahl, der zu dem ersten Ziel (59a; 99a) und dem zweiten Ziel (59b; 99b) ausgegeben worden ist, besitzt, in der Nähe der Laservorrichtung angeordnet ist.

15. Verfahren zum Einstellen einer optischen Achse für die Laservorrichtung nach einem der Ansprüche 9 bis 14, wobei eine Figur oder eine quadratische Form, die allgemein gleich einer Strahlungsregion des Lichtstrahls ist, auf eine Oberfläche des ersten Ziels (59a; 99a) und/oder des zweiten Ziels (59b; 99b) gezeichnet wird.

**Revendications**

1. Appareil de réglage d'axe optique pour un appareil laser, l'appareil de réglage d'axe optique comprenant :

une unité de génération de faisceau lumineux modulé qui inclut une source de lumière (2) et une lentille de couplage (3) pour libérer un faisceau lumineux (8) pour rayonner le faisceau lumineux libéré (8) vers une cible de détection (9) ;
de multiples dispositifs récepteurs de lumière (4a, 4b, 4c) qui reçoivent la lumière (10) réfléchie à partir de la cible de détection (9) ; et
une unité de collecte de lumière réfléchie (5) qui collecte la lumière (10) réfléchie à partir de la cible de détection (9) pour guider la lumière collectée vers les multiples dispositifs récepteurs de lumière (4a, 4b, 4c) ;
**caractérisé par** :

des première et seconde cibles (9 ; 59a, 59b ; 99a, 99b),
dans lequel :

les multiples dispositifs récepteurs de lumière (4a, 4b, 4c) sont agencés le long d'une direction verticale par rapport à une direction de libération du faisceau lumineux (8) de telle sorte que la cible de détection (9) est divisée en de multiples régions de détection (11a, 11b, 11c),

la première cible (59a ; 99a) et la seconde cible (59b ; 99b) sont agencées de telle sorte qu'une distance jusqu'à celles-ci à partir de l'appareil laser dans une direction d'émission du faisceau lumineux varie mutuellement,

une largeur dans une direction verticale par rapport à la direction d'émission du faisceau lumineux de la première cible (59a ; 99a) est formée de sorte à être inférieure à une largeur de rayonnement dans la direction verticale du faisceau lumineux,

l'un (4b) des multiples dispositifs récepteurs de lumière (4a, 4b, 4c) est installé au niveau d'une position qui reçoit uniquement une lumière réfléchie à partir de la première cible (59a ; 99a), et

les autres (4a, 4c) des multiples dispositifs récepteurs de lumière (4a, 4b, 4c) sont installés au niveau de positions qui reçoivent uniquement une lumière réfléchie à partir de la seconde cible (59b ; 99b).

**2.** Appareil de réglage d'axe optique pour appareil laser selon la revendication 1, dans lequel un angle de vue dans la direction verticale lorsque la première cible (59a) est vue à partir de l'appareil laser est généralement égal à un angle dans une direction verticale d'une plage de détection qui est divisée en de multiples régions de détection (11a, 11b, 11c).

**3.** Appareil de réglage d'axe optique pour appareil laser selon la revendication 1 ou 2, dans lequel la première cible (59a ; 99a) et la seconde cible (59b ; 99b) sont agencées avec une séparation supérieure ou égale à 1 m dans une direction de rayonnement de faisceau lumineux.

**4.** Appareil de réglage d'axe optique pour appareil laser selon l'une quelconque des revendications 1 à 3, dans lequel une distance entre la première cible (59a ; 99a) et la seconde cible (59b ; 99b) et l'appareil laser est dans une plage comprise entre 5 m et 100 m.

**5.** Appareil de réglage d'axe optique pour appareil laser selon l'une quelconque des revendications 1 à 4, dans lequel une réflectance de la seconde cible (59b ; 99b) est plus importante qu'une réflectance de la première cible (59a; 99a).

**6.** Appareil de réglage d'axe optique pour appareil laser selon l'une quelconque des revendications 1 à 5, dans lequel un appareil d'imagerie qui présente une sensibilité au faisceau lumineux libéré vers la première cible (59a ; 99a) et la seconde cible (59b ; 99b) est agencé au voisinage de l'appareil laser.

**7.** Appareil de réglage d'axe optique pour appareil laser selon l'une quelconque des revendications 1 à 6, dans lequel une figure ou forme carrée qui est généralement égale à une région de rayonnement du faisceau lumineux est dessinée sur une surface de la première cible (59a ; 99a) et/ou de la seconde cible (59b ; 99b).

**8.** Appareil de réglage d'axe optique pour appareil laser selon l'une quelconque des revendications 1 à 7, dans lequel une fente ayant une largeur d'ouverture qui est généralement égale à un angle de divergence dans une direction horizontale du faisceau lumineux est agencée entre la première cible (59a ; 99a) et la seconde cible (59b ; 99b), et l'appareil laser.

**9.** Procédé de réglage d'axe optique pour un appareil laser incluant une unité de génération de faisceau modulé qui inclut une source de lumière (2) et une lentille de couplage (3) pour libérer un faisceau lumineux (8) pour rayonner le faisceau lumineux libéré (8) vers une cible de détection (9),

de multiples dispositifs récepteurs de lumière (4a, 4b, 4c) qui sont agencés le long d'une direction verticale de telle sorte qu'ils peuvent recevoir une lumière (10) réfléchie par la cible de détection (9) et détecter la cible de détection (9) divisée en de multiples régions de détection (11a, 11b, 11c), et

une unité de collecte de lumière réfléchie (5) qui collecte la lumière (10) réfléchie par la cible de détection (9) pour guider la lumière collectée vers les multiples dispositifs récepteurs de lumière (4a, 4b, 4c), le procédé de réglage de l'axe optique comprenant les étapes suivantes :

la fourniture de première et seconde cibles (9 ; 59a, 59b ; 99a, 99b), la première cible (59a ; 99a) et la seconde cible (59b ; 99b) étant agencées de telle sorte qu'une distance jusqu'à celles-ci à partir de l'appareil laser dans une direction d'émission du faisceau lumineux varie mutuellement,

la définition d'une largeur dans une direction verticale par rapport à la direction d'émission du faisceau lumineux de la première cible (59a ; 99a) de sorte à être inférieure à une largeur de rayonnement dans la direction verticale du faisceau lumineux,

le réglage d'une position des multiples dispositifs récepteurs de lumière (4a, 4b, 4c) de telle sorte que l'un (4b) des multiples dispositifs récepteurs de lumière (4a, 4b, 4c) reçoit uniquement une lumière réfléchie à partir de la première cible (59a ; 99a) et les autres (4a, 4c) des multiples dispositifs récepteurs de lumière (4a, 4b, 4c) reçoivent uniquement une lumière réfléchie à partir de la seconde cible (59b ; 99b).

10. Procédé de réglage d'axe optique pour appareil laser selon la revendication 9, dans lequel un angle de vue dans la direction verticale lorsque la première cible (59a ; 99a) est vue à partir de l'appareil laser est généralement égal à un angle dans une direction verticale d'une plage de détection qui est divisée en de multiples régions de détection.

11. Procédé de réglage d'axe optique pour appareil laser selon la revendication 9 ou 10, dans lequel la première cible (59a ; 99a) et la seconde cible (59b ; 99b) sont agencées avec une séparation supérieure ou égale à 1 m dans une direction de rayonnement de faisceau lumineux.

12. Procédé de réglage d'axe optique pour appareil laser selon l'une quelconque des revendications 9 à 11, dans lequel une distance entre la première cible (59a ; 99a) et la seconde cible (59b ; 99b) et l'appareil laser est dans une plage comprise entre 5 m et 100 m.

13. Procédé de réglage d'axe optique pour appareil laser selon l'une quelconque des revendications 9 à 12, dans lequel une réflectance de la seconde cible (59b ; 99b) est plus importante qu'une réflectance de la première cible (59a ; 99a).

14. Procédé de réglage d'axe optique pour appareil laser selon l'une quelconque des revendications 9 à 13, dans lequel un appareil d'imagerie qui présente une sensibilité sélective en longueur d'onde au faisceau lumineux libéré vers la première cible (59a ; 99a) et la seconde cible (59b ; 99b) est agencé au voisinage de l'appareil laser.

15. Procédé de réglage d'axe optique pour appareil laser selon l'une quelconque des revendications 9 à 14, dans lequel une figure ou forme carrée qui est généralement égale à une région de rayonnement du faisceau lumineux est dessinée sur une surface de la première cible (59a ; 99a) et/ou de la seconde cible (59b ; 99b).

# FIG.1

EP 2 680 030 B1

## FIG.2

21

21c

21b

21a

X

Y

OPTIMAL
RELATIONSHIP

# FIG.3

31

31c

31b

31a

X

Y

OFFSET IN
HORIZONTAL DIRECTION

# FIG.4

41

41c

41b

41a

X

Y

OFFSET IN
VERTICAL DIRECTION

DISTANCE L BETWEEN LASER APPARATUS AND TARGET

INTERTARGET DISTANCE $\Delta L$

PROJECTED BEAM DIVERGENCE ANGLE (VERTICAL DIRECTION) $\theta_1$

DETECTION ANGLE $\theta b$ WITH RESPECT TO SECOND LIGHT RECEIVING DEVICE

VERTICAL

12

1

8

59a

59b

X
Z
Y

PROJECTED BEAM DIVERGENCE ANGLE (HORIZONTAL DIRECTION) $\theta_{11}$

HORIZONTAL

12

1

59b

59a

X
Z
Y

FIG.5

EP 2 680 030 B1

# FIG.6

TARGET DETECTION TIME DIFFERENCE
Δt

REFLECTED SIGNAL
FROM FIRST TARGET

SIGNAL STRENGTH

REFLECTED SIGNAL
FROM SECOND TARGET

LIGHT SOURCE
EMITTED LIGHT
WAVEFORM

SIGNAL WAVEFORM
OF FIRST LIGHT
RECEIVING DEVICE

SIGNAL WAVEFORM
OF SECOND LIGHT
RECEIVING DEVICE

SIGNAL WAVEFORM
OF THIRD LIGHT
RECEIVING DEVICE

TIME

EP 2 680 030 B1

# FIG.7

# FIG.8

TARGET DETECTION TIME DIFFERENCE

$\Delta t$

REFLECTED SIGNAL
FROM FIRST TARGET

SIGNAL STRENGTH

LIGHT SOURCE
EMITTED LIGHT
WAVEFORM

REFLECTED SIGNAL
FROM SECOND TARGET

SIGNAL WAVEFORM
OF FIRST LIGHT
RECEIVING DEVICE

SIGNAL WAVEFORM
OF SECOND LIGHT
RECEIVING DEVICE

SIGNAL WAVEFORM
OF THIRD LIGHT
RECEIVING DEVICE

TIME

# FIG.9

99a

99b

91c

91b

91a

X ⊙ → Z

Y

8

# FIG.10

101

101a

109a

POSITION OFFSET
TOLERANCE WIDTH IN
VERTICAL DIRECTION

TARGET WIDTH IN
VERTICAL DIRECTION

101b

101c

LIGHT RECEIVING WIDTH
IN VERTICAL DIRECTION

X

Y

# FIG.11

TARGET DETECTION TIME DIFFERENCE
Δt

REFLECTED SIGNAL
FROM FIRST TARGET

SIGNAL STRENGTH

LIGHT SOURCE
EMITTED LIGHT
WAVEFORM

REFLECTED SIGNAL
FROM SECOND TARGET

SIGNAL WAVEFORM
OF FIRST LIGHT
RECEIVING DEVICE

SIGNAL WAVEFORM
OF SECOND LIGHT
RECEIVING DEVICE

SIGNAL WAVEFORM
OF THIRD LIGHT
RECEIVING DEVICE

TIME

EP 2 680 030 B1

FIG.12

FIG.13

# FIG.14

TARGET DETECTION TIME DIFFERENCE

$\Delta t$

REFLECTED SIGNAL
FROM FIRST TARGET

REFLECTED SIGNAL FROM SECOND
TARGET WHEN REFLECTANCE OF
SECOND TARGET IS LARGER THAN
REFLECTANCE OF FIRST TARGET

REFLECTED SIGNAL FROM
SECOND TARGET WHEN TARGET
REFLECTANCES ARE MUTUALLY EQUAL

SIGNAL WAVEFORM
OF SECOND LIGHT
RECEIVING DEVICE

TIME

EP 2 680 030 B1

# FIG.15

# FIG.16

FIG.17

DISTANCE L BETWEEN LASER
APPARATUS AND TARGET

INTERTARGET DISTANCE
ΔL

PROJECTED BEAM
DIVERGENCE ANGLE
(VERTICAL DIRECTION)
$\theta_1$

DETECTION ANGLE $\theta b$ WITH
RESPECT TO SECOND LIGHT
RECEIVING DEVICE

PROJECTED BEAM
DIVERGENCE ANGLE
(HORIZONTAL DIRECTION)
$\theta_{11}$

VERTICAL

HORIZONTAL

EP 2 680 030 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1615047 A2
- DE 102009047303 A1
- JP 2009168472 A
- US 2010256940 A1
- JP 2002174684 A

**Non-patent literature cited in the description**

- Multiple-Target Laser Rangefmding Receiver Using a Silicon Photomultiplier Array. **KYU TAK SON et al.** IEEE TRANSACTIONS ON INSTRUMENTATION AND MEASUREMENT. IEEE SERVICE CENTER, 01 November 2010, vol. 59, 3005-3011
- Multiple-Target Laser Rangefinding Receiver Using a Silicon Photomultiplier Array. **KYU TAK SON et al.** IEEE TRANSACTIONS ON INSTRUMENTATION AND MEASUREMENT. IEEE SERVICE CENTER, 01 November 2010, vol. 59, 3005-3011